# EUROPEAN PATENT APPLICATION

(11) **EP 3 345 489 A1**
(43) Date of publication of application: **11.07.2018**
(21) Application number: 16841485.2
(22) Date of filing: 16.08.2016
(51) Int. Cl.: A23K 40/10, A23K 50/42, A23K 50/45

(54) **PET FOOD AND PRODUCING METHOD THEREFOR**

(30) Priority: 31.08.2015 JP 2015170913
(71) Applicant: Unicharm Corporation, Ehime 799-0111 (JP); Kyushu Petfood Co. Ltd., Kasuya-gun, Fukuoka 811-0123 (JP)
(72) Inventor: USUI Takahiro, Itami-shi Hyogo 664-0831 (JP); KOBAYASHI Yosuke, Itami-shi Hyogo 664-0831 (JP); KUROKAWA Yasunori, Kasuya-gun Fukuoka 811-0123 (JP)
(74) Representative: Wendels, Stefan
(86) International application number: PCT/JP2016/073905
(87) International publication number: WO 2017/038453

(57) **Abstract**

Provided is pet food formed of a trimmed product of a block-shaped molded article.

## Description

### Technical Field

The present invention relates to pet food and a producing method therefor.

Priority is claimed on Japanese Patent Application No. 2015-170913, filed on August 31, 2015, the content of which is incorporated herein by reference.

### Background Art

In pet food and feeding methods thereof in the related art, various ideas have been devised in order for pets to willingly eat pet food, that is, in order to improve palatability of pet food.

For example, PTL 1 describes that pet food obtained by drying and grinding food ingredients such as beef or chicken is used by being sprinkled on another pet food.

PTL 2 describes that pet food obtained by mixing a first material formed by crushing dried sardines in a small granular form with a second material formed by crushing dried bonito in a small granular form or dried bonito shavings in a small flake form is used by being sprinkled on another pet food.

### Citation List

### Patent Literature

[PTL 1] Japanese Utility Model (Registered) Publication No. 3077324
[PTL 2] Japanese Unexamined Patent Application, First Publication No. 2004-283158

### Summary of Invention

### Technical Problem

Pet food is generally accommodated in a packaging bag, stored, and then transported.

However, since pet food produced by crushing or cutting food ingredients as described in PTLs 1 and 2 is not uniform in shape or size, the pet food is easily shifted to one side in a packaging bag and more easily accumulated on the bottom of the packaging bag as granules are finer. Accordingly, fine granules of pet food tend to remain in the packaging bag when the pet food in the packaging bag is sprinkled on another pet food, and thus the size of pet food coming out from the packaging bag differs between the beginning and the end of using the pet food.

An object of the present invention is to provide pet food which is unlikely to be shifted to one side in a packaging bag; and a method of producing the pet food.

### Solution to Problem

The present invention has the following aspects.
[1] Pet food which is formed of a trimmed product of a block-shaped molded article.
[2] The pet food according to [1], in which the thickness of the trimmed product is in a range of 0.01 to 0.3 mm.
[3] The pet food according to [1] or [2], in which the molded article contains two or more ingredients.
[4] The pet food according to [3], in which the molded article contains an animal-derived ingredient and a plant-derived ingredient.
[5] A method of producing pet food, including: a trimming step of trimming a molded article obtained by molding ingredients in a block shape.
[6] The method of producing pet food according to [5], in which the molded article is trimmed in a width direction of the molded article.
[7] The method of producing pet food according to [5] or [6], in which the molded article is dried such that the moisture content thereof is in a range of 10% to 30% by mass, before the molded article is trimmed.
[8] The method of producing pet food according to any one of [5] to [7], in which the molded article is trimmed such that the thickness thereof is in a range of 0.01 to 0.3 mm, in the trimming step.
[9] The method of producing pet food according to any one of [5] to [8], in which the molded article is formed of a mixture of two or more ingredients.
[10] The method of producing pet food according to [9], in which the mixture is formed by mixing two or more ingredients under reduced pressure.
[11] The method of producing pet food according to [9] or [10], in which the molded article to be trimmed contains 10% to 90% by mass of an animal-derived ingredient in terms of a solid content, contains 5% to 80% by mass of a plant-derived ingredient in terms of a solid content, and contains 0.1% to 10% by mass of health functional components in terms of a solid content.
[12] The method of producing pet food according to any one of [9] to [11], in which the molded article to be trimmed contains 1% to 40% by mass of a humectant in terms of a solid content.
[13] The method of producing pet food according to any one of [9] to [12], in which the molded article to be trimmed contains 0.1% to 20% by mass of a palatability improver in terms of a solid content.

### Advantageous Effects of Invention

Pet food of the present invention is unlikely to be shifted to one side in a packaging bag.

According to a method of producing pet food of the present invention, it is possible to produce pet food which is unlikely to be shifted to one side in a packaging bag.

### Description of Embodiments

### [Pet food]

The pet food of the present invention is formed of a trimmed product of a block-shaped molded article.

The term "block shape" in the present invention means that the cross-sectional shapes formed when arbitrary plural sites of the molded article are cut in the width direction of the molded article are the same as one another. Examples of the cross-sectional shapes include a circular shape, an elliptical shape, a polygonal shape (such as a triangular shape, a rectangular shape, a pentagonal shape, a hexagonal shape, a diamond shape, or a trapezoidal shape), a star shape, and a heart shape, but the present invention is not limited to these.

The concept of the "block shape" include a "rod shape".

The "width direction of the molded article" will be described in detail later. In a case where the molded article is prepared through extrusion forming, the width direction of the molded article indicates a direction perpendicular to the extrusion direction. Further, in a case where the molded article is prepared by, for example, stretching ingredients by hand, the "width direction of the molded article" indicates a direction perpendicular to the stretching direction. In a case where the molded article has a rod shape, the "width direction of the molded article" indicates a direction perpendicular to the longitudinal direction.

Since a trimmed product is obtained by trimming the block-shaped molded article in the same direction, each trimmed product has a uniform shape and a uniform size.

The pet food of the present invention is a collection of trimmed products with a uniform shape and a uniform size. Therefore, the pet food of the present invention is unlikely to be shifted to one side in a packaging bag.

The thickness of the trimmed product is preferably in a range of 0.01 to 0.3 mm, more preferably in a range of 0.05 to 0.15 mm, and still more preferably in a range of 0.07 to 0.12 mm. In a case where the thickness of the trimmed product is in the above-described range, pet food of the present invention becomes familiar with another pet food when sprinkled thereon. Particularly in a case where another pet food is dry type granular pet food, the pet food of the present invention is easily entangled with respective granules (hereinafter, also referred to as "food granules") and falling of the pet food of the present invention from gaps between food granules is prevented. Since the proportion of the sprinkled pet food remaining on the surface of granular pet food which has been served on a dish is decreased when the sprinkled pet food falls from the gaps between food granules, effects of improving the palatability by means of sprinkling pet food are not sufficiently obtained.

The thickness of the trimmed product is measured using vernier calipers or an optical microscope.

The size of the trimmed product, that is, the area of the trimmed surface is preferably in a range of 1 to 200 mm², more preferably in a range of 5 to 100 mm², and still more preferably in a range of 20 to 80 mm². In a case where the area of the trimmed surface is in the above-described range, pet food of the present invention becomes familiar with another pet food when sprinkled thereon.

The shape of the trimmed surface is the same as the above-described cross-sectional shape.

The ratio (equivalent diameter:thickness) of the diameter (equivalent diameter) of a circle having a circle area which is the same as the area of the trimmed surface to the thickness of the trimmed product is preferably in a range of 23:1 to 700:1, more preferably in a range of 45:1 to 140:1, and still more preferably in a range of 50:1 to 100:1. In a case where the ratio of the equivalent diameter to the thickness of the trimmed product is in the above-described range, pet food of the present invention becomes familiar with another pet food when sprinkled thereon.

The molded article may be obtained by forming one kind of ingredient, but a molded article obtained by forming a mixture formed by mixing two or more kinds of ingredients is preferable.

Pet food of the related art which is used by being sprinkled on another pet food, that is, so-called Furikake is obtained by drying and crushing food ingredients such as beef or chicken. In other words, ingredients are formed of only an animal-derived ingredient such as beef or chicken and the ingredients are amorphous. Accordingly, non-standard size products need to be discarded in order to align the shapes and thus the production cost tends to increase.

However, the pet food of the present invention is a trimmed product of a block-shaped molded article. In other words, food ingredients (ingredients) are temporarily processed into a block-shaped molded article and then trimmed without processing (trimming) the food ingredients as they are. Therefore, two or more kinds of ingredients can be freely combined with one another so as to have a desired blending amount and then used.

In a case where the molded article contains two or more kinds of ingredients, for example, an animal-derived ingredient and inexpensive plant-derived ingredient, the production cost can be reduced compared to a case where only an animal-derived ingredient is used.

Examples of the animal-derived ingredient include meat (including internal organs) derived from animals (for example, domestic animals such as cattle, pigs, or chickens and fish); meat protein decomposed products (digest); and eggs. These may be used alone or in combination of two or more kinds thereof. It is preferable to use at least meat as the animal-derived ingredient.

From the viewpoint of further improving the palatability of pets, it is particularly preferable to use meat which has not been subjected to a heat treatment.

Examples of the plant-derived ingredient include cereals such as corn, wheat, rice, barley, oats, and rye; starch such as wheat starch, corn starch, rice starch, potato starch, tapioca starch, sweet potato starch, and sago starch; vegetable proteins such as corn gluten meal, defatted soybean meal, and soybean protein; and vegetables. These may be used alone or in combination of two or more kinds thereof. It is preferable to use at least cereals as the plant-derived ingredient.

The molded article may further contain health functional components, humectants, palatability improvers, and the like in addition to the above-described ingredients.

As described above, in a case where the ingredients of the pet food are formed of only an animal-derived ingredient such as beef or chicken, this results in lack of nutrition balance. However, nutritionally well-balanced pet food can be obtained when the molded article contains health functional components as well.

The health functional components may be appropriately selected according to the health function required for the pet food and then used. Examples of the health functional components include glucosamine, chondroitin, vitamins, minerals, amino acids, and fats and oils such as DHA, EPA, fish oil, and omega series. These may be used alone or in combination of two or more kinds thereof.

A humectant is a component that holds the moisture in the molded article and reduces the moisture activity. In a case where the molded article contains a humectant, moderate softness can be maintained without increasing the moisture content in the molded article so that powder is unlikely to be generated at the time of trimming.

Examples of the humectant include glycerin, propylene glycol, and sorbitol. These may be used alone or in combination of two or more kinds thereof.

In a case where the molded article contains a palatability improver, the variation of taste can be changed. In a case where an animal-derived ingredient and a plant-derived ingredient are used in combination as described above, the production cost can be reduced compared to the case where only an animal-derived ingredient is used, but the taste may become worse. In such a case, worsening of taste can be suppressed while reducing the production cost by further combining a palatability improver with the ingredients.

Examples of the palatability improver include beans, animal ingredient enzymatic decomposition products, plant ingredient enzymatic decomposition products, and yeast extracts. These may be used alone or in combination of two or more kinds thereof.

Examples of the beans include soybeans.

Examples of the animal ingredient enzymatic decomposition product include an enzymatic decomposition product of chicken, an enzymatic decomposition product of chicken liver, an enzymatic decomposition product of pork, an enzymatic decomposition product of pork liver, an enzymatic decomposition product of beef, an enzymatic decomposition product of beef liver, and an enzymatic decomposition product of seafood. These may be used alone or in combination of two or more kinds thereof.

Examples of the plant ingredient enzymatic decomposition product include an enzymatic decomposition product of beans and an enzymatic decomposition product of tubers (potatoes or the like). These may be used alone or in combination of two or more kinds thereof.

Examples of the yeast extract include a brewer's yeast extract, a baker's yeast extract, and a torula yeast extract. These may be used alone or in combination of two or more kinds thereof.

The molded article may further contain various additives such as flavor ingredients, fibers, coloring agents, thickening stabilizers, and quality improving agents.

The pet food of the present invention described above is formed of a trimmed product of a block-shaped molded article. Since each trimmed product has a uniform shape and a uniform size and is lightweight, the pet food of the present invention which is a collection of these trimmed products is unlikely to be shifted to one side in a packaging bag.

Particularly in a case where the thickness of the trimmed product is in a range of 0.01 to 0.3 mm, the pet food of the present invention becomes familiar with another pet food when sprinkled thereon.

In a case of the pet food of the present invention, the combination or the blending amount of ingredients contained in the molded article can be freely changed. Therefore, in a case where the molded article contains two or more kinds of ingredients, for example, an animal-derived ingredient and inexpensive plant-derived ingredient, the production cost can be reduced compared to a case where only an animal-derived ingredient is used.

It is preferable that the pet food of the present invention is used by being sprinkled on dry type granular pet food, semi-moist type pet food, wet type pet food, or the like.

The pet food of the present invention is suitable as Furikake particularly for dry type granular pet food.

### [Method of producing pet food]

The pet food of the present invention is produced by performing a trimming step described below. Further, a heating step, a cutting step, a drying step, and the like described below may be performed before the trimming step.

Hereinafter, an embodiment of the method of producing pet food of the present invention will be described, but the present invention is not limited to these.

The method of producing pet food according to the present embodiment includes a forming step, a heating step, a cutting step, a drying step, and a trimming step.

### <Forming step>

The forming step is a step of molding ingredients in a block shape.

As the method of molding ingredients in a block shape, a method of performing extrusion forming on ingredients processed into a shape, which is suitable for forming, such as a minced shape or a powder shape is exemplified. In addition, the ingredients processed into a shape, which is suitable for forming, may be formed in a block shape by stretching the ingredients by hand.

From the viewpoint of improving the formability, the ingredients processed into a shape, which is suitable for forming, may be formed after water is added to the ingredients.

From the viewpoint of obtaining a large amount of trimmed products in one trimming step, it is preferable that the ingredients are formed in a rod shape.

From the viewpoint of excellent productivity, extrusion forming is preferable as the forming method.

The shape of a mouthpiece (die) used for extruding ingredients becomes the shape of the size of the trimmed product (trimmed surface). Examples of the shape of the mouthpiece (that is, the shape of the trimmed surface) include a circular shape, an elliptical shape, a polygonal shape (such as a triangular shape, a rectangular shape, a pentagonal shape, a hexagonal shape, a diamond shape, or a trapezoidal shape), a star shape, and a heart shape, but the present invention is not limited to these.

The area of the mouthpiece (that is, the area of the trimmed surface) is preferably in a range of 1 to 200 mm², more preferably in a range of 5 to 100 mm², and still more preferably in a range of 20 to 80 mm².

Examples of the ingredients include the above-described animal-derived ingredients, plant-derived ingredients, health functional components, humectants, palatability improvers, and various additives.

The molded article obtained in the forming step may be formed of one kind of ingredient, but it is preferable that the molded article is formed of a mixture of two or more kinds of ingredients. For example, in a case where the molded article is formed of a mixture containing an animal-derived ingredient and inexpensive plant-derived ingredient, the production cost can be reduced compared to a case where only an animal-derived ingredient is used.

In a case where the molded article is formed of a mixture of two or more kinds of ingredients, a mixing step of mixing two or more kinds of ingredients may be performed before the forming step to form the ingredients in a block shape using the obtained mixture. The ingredients may be formed in a block shape using the mixture obtained by mixing two or more kinds of ingredients at a place different from the place where the pet food of the present invention is produced.

In a case where the molded article is formed of a mixture of two or more kinds of ingredients, it is preferable that the mixture is obtained by mixing two or more kinds of ingredients under reduced pressure. Bubbles are unlikely to enter the mixture when obtained by mixing two or more kinds of ingredients under reduced pressure. Therefore, since bubbles are unlikely to enter the molded article in a case where the molded article is formed using a mixture obtained by mixing two or more kinds of ingredients under reduced pressure, the shape of the molded article is easily stabilized. In a case where the molded article contains bubbles, holes are likely to be generated in the trimmed product when trimmed so that the appearance becomes worse.

Further, the "under reduced pressure" indicates a state of a pressure lower than the atmospheric pressure (1013 hPa at 23°C). In other words, the "under reduced pressure" means that the pressure reduction degree (vacuum degree) is -0.1 MPa or greater and less than 0 MPa.

Here, the "pressure reduction degree" indicates the gauge pressure (pressure obtained by setting the atmospheric pressure to zero).

In a case where the molded article is formed of a mixture of two or more kinds of ingredients, it is preferable that respective ingredients are blended with one another such that the content of ingredients in terms of a solid content with respect to the total mass of the molded article to be trimmed is in the range described below. In addition, the "molded article to be trimmed" indicates the molded article immediately before being trimmed. In a case where the drying step described below is performed, the "molded article to be trimmed" indicates the molded article after being dried.

The content of the animal-derived ingredient in terms of a solid content is preferably in a range of 10% to 90% by mass, more preferably in a range of 15% to 70% by mass, and still more preferably in a range of 20% to 60% by mass with respect to the total mass of the molded article to be trimmed. In a case where the content of the animal-derived ingredient is 10% by mass or greater, excellent palatability is easily obtained. Further, in a case where the content of the animal-derived ingredient is 90% by mass or less, the production cost can be reduced.

The content of the plant-derived ingredient in terms of a solid content is preferably in a range of 5% to 80% by mass, more preferably in a range of 10% to 40% by mass, and still more preferably in a range of 15% to 30% by mass with respect to the total mass of the molded article to be trimmed. In a case where the content of the plant-derived ingredient is 5% by mass or greater, the production cost can be reduced. Further, excellent formability is easily obtained. In a case where the content of the plant-derived ingredient is 80% by mass or less, there is less influence on the palatability.

The content of the health functional components with respect to the total mass of the molded article to be trimmed depends on the kind of the health functional component. For example, the content thereof in terms of a solid content is preferably in a range of 0.1% to 10% by mass, more preferably in a range of 0.5% to 5% by mass, and still more preferably in a range of 1% to 3% by mass. In a case where the content of the health functional components is 0.1% by mass or greater, the function of improving the health can be sufficiently imparted to the pet food. Meanwhile, the content of the health functional components is 10% by mass or less, there is less influence on the palatability.

The content of the humectant in terms of a solid content is preferably in a range of 1% to 40% by mass, more preferably in a range of 5% to 35% by mass, and still more preferably in a range of 10% to 30% by mass with respect to the total mass of the molded article to be trimmed. In a case where the content of the humectant is 1% by mass or greater, generation of powder at the time of trimming the molded article can be further suppressed and the yield of the pet food is increased. Meanwhile, in a case where the content of the humectant is 40% by mass or less, there is less influence on the palatability.

The content of the palatability improver in terms of a solid content is preferably in a range of 1% to 20% by mass, more preferably in a range of 0.1% to 10% by mass, and still more preferably in a range of 2% to 8% by mass with respect to the total mass of the molded article to be trimmed.

In a case where the content of the palatability improver is 0.1% by mass or greater, the palatability is further improved. Further, in a case where the content of the palatability improver is 20% by mass or less, there is less influence on the texture of the pet food.

The content (amount in terms of a solid content) of respective ingredients in the molded article can be calculated from the blending amount of respective ingredients (proportion of respective ingredients in the mixture), the amount of a solid content in respective ingredients, and the moisture content of the molded article to be trimmed.

### <Heating step>

The heating step is a step of heating the block-shaped molded article.

By heating the molded article before trimming the molded article, the shape of the molded article is easily stabilized and the molded article is easily trimmed in the trimming step.

In the heating step, the molded article may be heated by baking or steaming.

In a case where the molded article is baked, the heating temperature (baking temperature) of the molded article is preferably in a range of 60°C to 200°C, more preferably in a range of 75°C to 150°C, and still more preferably in a range of 90°C to 120°C. Further, the heating time (baking time) of the molded article is preferably in a range of 20 to 60 minutes, more preferably in a range of 30 to 50 minutes, and still more preferably in a range of 40 to 45 minutes.

In a case where the molded article is steamed, the same heat treatment as in a case where the molded article is baked may be performed.

### <Cutting step>

The cutting step is a step of cutting the molded article into a size (length) suitable for trimming.

### <Drying step>

The drying step is a step of drying the molded article such that the moisture content is set to be in a range of 10% to 30% by mass.

By performing the drying step, the moisture content of the molded article is set to be in a range of 10% to 30% by mass with respect to the total mass of the molded article to be trimmed. In a case where the moisture content of the molded article is 10% by mass or greater, powder is unlikely to be generated when the molded article is trimmed and the yield of the pet food is increased. Meanwhile, in a case where the moisture content is 30% by mass or less, the trimmed products are unlikely to be bonded to each other and the trimmed products are unlikely to adhere to a trimming blade or the like used in the trimming step, and thus the molded article is easily trimmed. The moisture content of the molded article to be trimmed is preferably in a range of 12% to 18% by mass.

The drying temperature and the drying time of the molded article are not particularly limited as long as the moisture content of the molded article is in the above-described range at the temperature during the time. For example, the drying temperature is preferably in a range of 60°C to 120°C and the drying time is preferably in a range of 10 to 17 hours.

Further, the drying step may serve also as the heating step.

The moisture content of the molded article is measured in the following manner.

An object to be measured is ground using a grinder so as to pass through a sieve having an opening diameter of 1 mm and then used as an analytical sample. 2 g to 5 g of the analytical sample is accurately weighed, put into an aluminum weighing dish (after the sample has been dried in advance, the weight thereof is accurately weighed), dried at a temperature of 135 ± 2°C for 2 hours, and left to be cooled in a desiccator. Next, the weight thereof is accurately weighed, and then the moisture content is acquired from a difference between the weights weighed before and after the drying.

### <Trimming step>

The trimming step is a step of trimming the molded article obtained by forming the ingredients in a block shape.

A trimmed product having a uniform shape and a uniform size is obtained with excellent productivity by trimming the molded article obtained by forming the ingredients in a block shape.

It is preferable that the molded article is trimmed in the width direction. A trimmed product having a uniform shape and a uniform size is obtained with an excellent yield by trimming the molded article in the width direction. In a case where the molded article has a rod shape, the molded article may be trimmed obliquely with respect to the width direction of the molded article. In this case, the size of a trimmed product obtained by trimming an end portion of the molded article having a rod shape is different from the size of a trimmed product obtained by trimming a portion (central portion) other than the end portion. Therefore, the trimmed product obtained by trimming a portion other than the end portion with a uniform shape and a uniform size is the pet food of the present invention, and the yield thereof decreases.

Further, the end portion of the molded article having a rod shape indicates a region where the entire end surface of the molded article before being trimmed is trimmed.

A commercially available trimming machine can be used for trimming the molded article.

It is preferable that the molded article is trimmed such that the thickness of the trimmed product is set to be in a range of 0.01 to 0.3 mm in the trimming step. In a case where the thickness of the trimmed product is in the above-described range, the pet food of the present invention becomes familiar with another pet food when sprinkled thereon.

It is more preferable that the molded article is trimmed such that the thickness of the trimmed product is set to be in a range of 0.07 to 0.12 mm in the trimming step.

According to the method of producing pet food of the present embodiment described above, pet food which is a collection of trimmed products with a uniform shape and a uniform size is obtained because a block-shaped molded article is trimmed. Therefore, the pet food obtained in the present invention is accommodated in a packaging bag, the pet food is unlikely to be shifted to one side in the packaging bag.

Particularly in a case where the molded article is trimmed in the width direction thereof, pet food is obtained with an excellent yield.

Moreover, in a case where the molded article is trimmed such that the thickness of the trimmed product is set to be in a range of 0.01 to 0.3 mm, the pet food obtained in the present invention becomes familiar with another pet food when sprinkled thereon.

Further, according to the method of producing pet food of the present invention, the combination or the blending amount of ingredients contained in the molded article can be freely changed. Therefore, in a case where the molded article contains two or more kinds of ingredients, for example, an animal-derived ingredient and inexpensive plant-derived ingredient, the production cost can be reduced compared to a case where only an animal-derived ingredient is used.

In a case where the molded article is cut into a desired thickness instead of being trimmed, the size of the cut object is unlikely to be uniform and this becomes more significant as the thickness decreases. Accordingly, there is a limit to reduce the thickness in a case of cutting the molded article compared to a case of trimming the molded article. For example, in the case of cutting the molded article, it is difficult to cut the molded article such that the thickness thereof is set to 0.3 mm or less. Consequently, in a case where the same amount of the cut objects as the amount of the trimmed products are sprinkled on another pet food, the ratio of the amount of cut objects (the number of pieces of cut objects) to the amount of another pet food is small, and thus it is difficult to feel that a sufficient amount of cut objects are sprinkled thereon.

However, according to the pet food obtained in the present invention, it is easy to feel that a sufficient amount of pet food is sprinkled on another pet food when the same amount of pet food as the amount of cut objects is sprinkled thereon.

The method of producing pet food of the present invention is not limited to those described above. The method of producing pet food described above includes the forming step, the heating step, the cutting step, the drying step, and the trimming step, but the forming step, the heating step, the cutting step, and the drying step may not be performed. However, from the viewpoint of easily trimming the molded article in the trimming step, it is preferable that the molded article is dried such that the moisture content is set to be in a range of 10% to 30% by mass before the molded article is trimmed.

Further, the trimming step may be performed using the ingredients which have been formed in a block shape at a place different from the place where the pet food of the present invention is produced. At this time, the molded article may be heated, cut, or dried, as necessary, before being trimmed.

### [Examples]

Hereinafter, the present invention will be described in more detail with reference to examples, but the present invention is not limited to these examples.

### [Ingredients]

Main ingredients listed in Table 1 are as follows.
Animal-derived ingredient: chicken breast meat and moisture in amount of 77.1 % by mass
Plant-derived ingredient: flour and moisture in amount of 12.9% by mass
Health functional components: glucosamine and moisture in amount of 14.3% by mass
Palatability improvers: soybeans and moisture in amount of 6.6% by mass
Humectants: glycerin and moisture in amount of 15.5% by mass

### [Measurement and evaluation method]

### <Measurement of moisture content>

An object to be measured was ground using a grinder so as to pass through a sieve having an opening diameter of 1 mm and then used as an analytical sample. 2 g to 5 g of the analytical sample was accurately weighed, put into an aluminum weighing dish (after the sample had been dried in advance, the weight thereof was accurately weighed), dried at a temperature of 135 ± 2°C for 2 hours, and left to be cooled in a desiccator. Next, the weight thereof was accurately weighed, and then the moisture content was acquired from a difference between the weights weighed before and after the drying.

### <Evaluation of appearance>

The shape and the size of trimmed products (or cut objects) were visually observed and evaluated based on the following evaluation criteria.
A: The shape and the size of the trimmed products (or the cut objects) were uniform.
B: Trimmed products (or cut objects) with a uniform shape and a uniform size were obtained, but trimmed products (or cut objects) smaller than the trimmed products (or cut objects) with a uniform size were also obtained.
C: Trimmed products (or cut objects) with a uniform shape and a uniform size were obtained, but powder was generated at the time of trimming.
D: Trimmed products (or cut objects) with a uniform shape and a uniform size were obtained, but holes were generated in at least some trimmed products (or cut objects).
E: The size of the trimmed products (or cut objects) was slightly uneven.
F: The size of the trimmed products (or cut objects) was significantly uneven.

### <Evaluation of familiarity with another pet food>

10 g of the pet food (Furikake) obtained in the examples and comparative examples was sprinkled on 190 g of another pet food (pet food for dogs, manufactured by Unicharm Corporation, "BEST BALANCE" (trade name), particle diameter of food granules: 9 mm, thickness of food granules: 5.5 mm), mixed with each other for 30 seconds, and allowed to pass through a sieve having an opening diameter of 7 mm. Thereafter, the amount of pet food (Furikake) of each example which had passed through a sieve was measured and evaluated based on the following evaluation criteria.
A: The amount of pet food (Furikake) fallen from the sieve was less than 30% of the total amount of the pet food (total amount of Furikake).
B: The amount of pet food (Furikake) fallen from the sieve was 30% or greater and less than 60% of the total amount of the pet food (total amount of Furikake).
C: The amount of pet food (Furikake) fallen from the sieve was 60% or greater of the total amount of the pet food (total amount of Furikake). Alternatively, the amount of Furikake having a width and length of 10 mm or greater was 10% or greater (in other words, the size of Furikake is extremely large so that Furikake tends to be collected in one site, and therefore, dogs selectively eat only the collected Furikake).

### [Example 1]

Each ingredients and water were mixed under reduced pressure of -0.1 MPa using a vacuum ball cutter such that the blending amount thereof in terms of a solid content of each ingredient was set to the value listed in Table 1, thereby obtaining a mixture (mixing step). The moisture content of the obtained mixture was measured and the value was 54.9% by mass.

The obtained mixture was extruded and formed in a rod shape using an extruder provided with a mouthpiece having a length of 7 mm and a width of 7 mm (forming step).

The obtained molded article was heated at a temperature of 95°C for 40 minutes (heating step).

The heated molded article was cut such that the length thereof in the longitudinal direction was set to 24 m (cutting step).

The cut molded article was dried at a temperature of 60°C for 10 hours (drying step). The moisture content of the dried molded article was measured and the value was 17% by mass.

The dried molded article was trimmed in the width direction using a trimming machine such that the thickness thereof was set to be in a range of 0.06 to 0.1 mm, and then pet food as a collection of a plurality of trimmed products, in which the size of the trimmed surface was 7 mm² and the shape of the trimmed surface was square, was obtained (trimming step).

The appearance of the obtained pet food and the familiarity of the obtained pet food with another pet food were evaluated. The results are listed in Table 1.

### [Example 2]

Pet food as a collection of a plurality of trimmed products was produced in the same manner as in Example 1 except that the molded article was trimmed obliquely with respect to the width direction using a commercially available bonito trimming machine in the trimming step, and the evaluation was performed. The results are listed in Table 1. Further, in the size of the trimmed surface of the obtained trimmed product, the width thereof was 7 mm, the length thereof was in a range of 40 to 60 mm, and the shape of the trimmed surface was rectangular.

### [Example 3]

Pet food as a collection of a plurality of trimmed products was produced in the same manner as in Example 1 except that the blending amount of respective ingredients in terms of a solid content was changed into the value listed in Table 1 in the mixing step, and the evaluation was performed. The results are listed in Table 1.

### [Example 4]

Pet food as a collection of a plurality of trimmed products was produced in the same manner as in Example 1 except that the respective ingredients were mixed under the atmospheric pressure in the mixing step, and the evaluation was performed. The results are listed in Table 1.

### [Example 5]

Pet food as a collection of a plurality of trimmed products was produced in the same manner as in Example 1 except that the molded article was trimmed such that the thickness thereof was set to 0.3 mm in the trimming step, and the evaluation was performed. The results are listed in Table 1.

### [Example 6]

Pet food as a collection of a plurality of trimmed products was produced in the same manner as in Example 1 except that the mixture was formed using an extruder provided with a mouthpiece having a length of 2 mm and a width of 2 mm in the forming step, and the evaluation was performed. The results are listed in Table 1. Further, the size of the trimmed surface of the obtained trimmed product was 2 mm² and the shape of the trimmed surface was square.

### [Comparative Example 1]

Chicken breast meat was dried such that the moisture content thereof was set to 17% by mass.

The dried chicken breast meat was trimmed using a commercially available bonito trimming machine, thereby obtaining pet food as a collection of a plurality of trimmed products.

The appearance of the obtained pet food and the familiarity of the obtained pet food with another pet food were evaluated. The results are listed in Table 1.

### [Comparative Example 2]

The process up to the completion of the drying step was performed in the same manner as in Example 1 except that the blending amount of respective ingredients in terms of a solid content was changed into the value listed in Table 1 in the mixing step and the mixture was formed using an extruder provided with a mouthpiece having a length of 50 mm and a width of 15 mm in the forming step.

The dried molded article was cut in the width direction using a cutting machine such that the thickness thereof was set to 0.6 mm, thereby obtaining pet food as a collection of a plurality of cut objects (trimming step).

The appearance of the obtained pet food and the familiarity of the obtained pet food with another pet food were evaluated. The results are listed in Table 1.

**[Table 1]**

| | | Example 1 | Example 2 | Example 3 | Example 4 | Example 5 | Example 6 | Comparative Example 1 | Comparative Example 2 |
|---|---|---|---|---|---|---|---|---|---|
| Proportion in mixture (% by mass) | Animal-derived ingredient | 11.7 | 11.7 | 11.7 | 11.7 | 11.7 | 11.7 | 23 | 37.5 |
| | Plant-derived ingredient | 14.8 | 14.8 | 14.8 | 14.8 | 14.8 | 14.8 | 0 | 11.5 |
| | Health functional component | 0.6 | 0.6 | 0.6 | 0.6 | 0.6 | 0.6 | 0 | 0 |
| | Palatability improver | 2.8 | 2.8 | 2.8 | 2.8 | 2.8 | 2.8 | 0 | 0 |
| | Humectant | 15.2 | 15.2 | 0 | 15.2 | 15.2 | 15.2 | 0 | 12.7 |
| | Moisture | 54.9 | 54.9 | 70.1 | 54.9 | 54.9 | 54.9 | 77 | 38.3 |
| | Total amount | 100 | 100 | 100 | 100 | 100 | 100 | 100 | 100 |
| Proportion in molded article to be trimmed (% by mass) | Animal-derived ingredient | 21.5 | 21.5 | 32.5 | 21.5 | 21.5 | 21.5 | 83 | 50.4 |
| | Plant-derived ingredient | 27.2 | 27.2 | 41.1 | 27.2 | 27.2 | 27.2 | 0 | 15.5 |
| | Health functional component | 1.1 | 1.1 | 1.6 | 1.1 | 1.1 | 1.1 | 0 | 0 |
| | Palatability improver | 5.2 | 5.2 | 7.8 | 5.2 | 5.2 | 5.2 | 0 | 0 |
| | Humectant | 28 | 28 | 0 | 28 | 28 | 28 | 0 | 17.1 |
| | Moisture | 17 | 17 | 17 | 17 | 17 | 17 | 17 | 17 |
| | Total amount | 100 | 100 | 100 | 100 | 100 | 100 | 100 | 100 |
| Production conditions | Mixing condition | Under reduced pressure | Under reduced pressure | Under reduced pressure | Under atmospheric pressure | Under reduced pressure | Under reduced pressure | - | Under reduced pressure |
| | Trimming direction | Width direction | Oblique direction | Width direction | Width direction | Width direction | Width direction | Oblique direction | Cut in width direction |
| Trimmed product | Thickness (mm) | 0.06 to 0.1 | 0.06 to 0.1 | 0.06 to 0.1 | 0.06 to 0.1 | 0.27 to 0.33 | 0.06 to 0.1 | 0.05 to 0.1 | 0.57 to 0.63 |
| | Size | 7 mm² | With of 7 mm Length of 40 to 60 mm | 7 mm² | 7 mm² | 7 mm² | 2 mm² | Short diameter of 4 mm Long diameter of 10 to 20 mm | Width of 15 mm Length of 45 to 60 mm |
| | Shape | Square | Rectangular | Square | Square | Square | Square | Slightly uneven | Rectangular |
| Evaluation | Appearance | A | B | C | D | A | A | F | E |
| | Familiarity | A | B | A | A | A | B | B | C |

As evident from the results of Table 1, pet food with a uniform shape and a uniform size was obtained in each example. The pet food obtained in each example became easily familiar with another pet food when sprinkled thereon.

Particularly, in cases of Examples 1, 5, and 6 in which two or more ingredients containing a humectant were mixed with one another under reduced pressure in the mixing step and trimmed in the width direction of the molded article, pet food with a uniform shape and a uniform size was able to be produced with an excellent yield. Among these, particularly the pet food obtained in Examples 1 and 5 became easily familiar with another pet food when sprinkled thereon.

Meanwhile, the shape and size of the pet food in Comparative Example 1 which was obtained by drying and trimming chicken breast meat was significantly uneven.

The shape and size of the pet food of Comparative Example 2 which was obtained by cutting the molded article were slightly uneven. Further, the pet food was unlikely to be familiar with another pet food when sprinkled thereon. Further, compared to each example and Comparative Example 1, the ratio of the amount of the pet food (the number of pieces of cut objects) of Comparative Example 2 to the amount of another pet food when the pet food of Comparative Example 2 was sprinkled on another pet food was small, and it was hard to feel that a sufficient amount of pet food was sprinkled on another pet food.

Hereinbefore, preferred examples of the present invention have been described, but the present invention is not limited thereto. Addition, omission, substitution, and other modifications of configurations are possible within the range not departing from the scope of the present invention. Further, the present invention is not limited by the description above and only limited by the range of claims.

## Claims

1. Pet food which is formed of a trimmed product of a block-shaped molded article.

2. The pet food according to claim 1,
wherein the thickness of the trimmed product is in a range of 0.01 to 0.3 mm.

3. The pet food according to claim 1 or 2,
wherein the molded article contains two or more ingredients.

4. The pet food according to claim 3,
wherein the molded article contains an animal-derived ingredient and a plant-derived ingredient.

5. A method of producing pet food, comprising:
a trimming step of trimming a molded article obtained by molding ingredients in a block shape.

6. The method of producing pet food according to claim 5,
wherein the molded article is trimmed in a width direction of the molded article.

7. The method of producing pet food according to claim 5 or 6,
wherein the molded article is dried such that the moisture content thereof is in a range of 10% to 30% by mass, before the molded article is trimmed.

8. The method of producing pet food according to any one of claims 5 to 7,
wherein the molded article is trimmed such that the thickness thereof is in a range of 0.01 to 0.3 mm, in the trimming step.

9. The method of producing pet food according to any one of claims 5 to 8,
wherein the molded article is formed of a mixture of two or more ingredients.

10. The method of producing pet food according to claim 9,
wherein the mixture is formed by mixing two or more ingredients under reduced pressure.

11. The method of producing pet food according to claim 9 or 10,
wherein the molded article to be trimmed contains 10% to 90% by mass of an animal-derived ingredient in terms of a solid content, contains 5% to 80% by mass of a plant-derived ingredient in terms of a solid content, and contains 0.1% to 10% by mass of health functional components in terms of a solid content.

12. The method of producing pet food according to any one of claims 9 to 11,
wherein the molded article to be trimmed contains 1% to 40% by mass of a humectant in terms of a solid content.

13. The method of producing pet food according to any one of claims 9 to 12,
wherein the molded article to be trimmed contains 0.1% to 20% by mass of a palatability improver in terms of a solid content.
